# EUROPEAN PATENT APPLICATION

(11) **EP 2 088 014 A2**
(43) Date of publication of application: **12.08.2009**
(21) Application number: 09001594.2
(22) Date of filing: 05.02.2009
(51) Int. Cl.: B60H 1/00

(54) **Air-conditioner for vehicle**

(30) Priority: 07.02.2008 JP 2008027608
(71) Applicant: Calsonic Kansei Corporation, Saitama-shi Saitama 331-8501 (JP)
(72) Inventor: Ozeki, Yukio, Saitama-shi Saitama 331-8501 (JP)
(74) Representative: Köhler, Walter

(57) **Abstract**

An air-conditioner for blowing out conditioned air independently to right and left sides of a vehicle includes a unit casing (1), a cooling heat exchanger (2) and a heating heat exchanger (3) provided in the unit casing, a control device (28), and right and left conditioning units (1a, 1b) each having a front duct (F) to blow out conditioned air toward a front seat, a rear duct (R) to blow out conditioned air toward a front seat, and a front/rear switching door (S) to switch between a front state where the conditioned air is blown out via the front duct to the front seat and a rear state where the conditioned air is blown out via the rear duct to the rear seat. The control device (28) sets one of the front/rear switching doors to the front state and the other of the front/rear switching doors to the rear state.

## Description

### BACKGROUND OF THE INVENTION

### Field of the Invention

The present invention relates to an air-conditioner of right/left independent air-distribution type which blows out conditioned air to front and rear seats independently on right and left sides of a vehicle.

### Description of the Related Art

The following air-conditioner has heretofore been known that blows out conditioned air to front and rear seats of a vehicle. Specifically, a front-seat air-mix door is disposed at a location close to a duct unit for the front seat on the upstream side of a heating heat exchanger for heating air in a unit casing. In addition, a rear-seat mix door is disposed at a location close to a duct unit for the rear seat on the upstream side of the heating heat exchanger. Moreover, a rear-seat conditioned air shielding door is disposed at a location on the downstream side of the rear-seat duct unit of the heating heat exchanger. When at least the rear-seat mix door is maneuvered to such a position where the rear-seat mix door makes a rear-seat cooled conditioned air bypass passage fully open, the communication between the downstream side of the rear-seat duct unit and the rear-seat duct unit is shut off by the rear-seat conditioned air shielding door (see, for example, Japanese Patent No. 4092820).

In the conventional air-conditioner for vehicle, it is possible to send all of the volume of the conditioned air to the front-seat while stopping sending the conditioned air to the rear-seat when priority is given to the clearing of the windshield as in a defroster mode. However, the conventional air-conditioner for vehicle has a problem in that it is impossible to selectively send the conditioned air to the rear seats with priority even in a case where an occupant is absent in the front passenger seat and present in the rear seat.

### SUMMARY OF THE INVENTION

An object of the present invention is to provide an air-conditioner for vehicle, which is capable of obtaining a comfortable air-conditioning performance corresponding to a pattern of occupants present in a vehicle, and particularly, of improving the comfort of an occupant in the rear seat without impairing the comfort of the driver.

To achieve the above object, an air-conditioner according to an embodiment of the present invention for blowing out conditioned air independently to right and left sides of a vehicle, includes a unit casing, a cooling heat exchanger and a heating heat exchanger provided in the unit casing to generate conditioned air, a control device, and right and left conditioning units each having a front duct configured to blow out the conditioned air toward a front seat, a rear duct configured to blow out the conditioned air toward a front seat, and a front/rear switching door configured to switch between a front state where the conditioned air is blown out via the front duct to the front seat and a rear state where the conditioned air is blown out via the rear duct to the rear seat. The control device is configured to set one of the front/rear switching doors of the right and left conditioning units to the front state and the other of the front/rear switching doors of the right and left conditioning units to the rear state.

### BRIEF DESCRIPTION OF THE DRAWINGS

FIG. 1 is an overall system diagram illustrating an air-conditioner for vehicle of an embodiment.
FIG. 2 is a schematic plan view illustrating a condition in an interior of a vehicle employing the air-conditioner for vehicle of the embodiment.
FIG- 3 is a diagram showing a control panel of the air-conditioner for vehicle of the embodiment.
FIG. 4 is a flowchart showing air-conditioning control processing performed by an air-conditioning controller of the air-conditioner for vehicle of the embodiment.
FIG. 5 is an operation explanatory view illustrating the flow of conditioned air at the time of maximum heating of a rear seat in the air-conditiuner for vehicle of the embodiment.
FIG. 6 is an operation explanatory view illustrating the flow of conditioned air at the time of maximum cooling of the rear seat in the air-conditioner for vehicle of the embodiment.
FIG. 7 is an operation explanatory view illustrating the flow of the conditioned air at the time of maximum heating of a front seat in the air-conditioner for vehicle of the embodiment.
FIG. 8 is an operation explanatory view illustrating the flow of the conditioned air at the time of maximum cooling of the front seat in the air-conditioner for vehicle of the embodiment.
FIG. 9 is an operation explanatory view illustrating the flow of the conditioned air at the time of heating the front and rear seats in the air-conditioner for vehicle of the embodiment.
FIG. 10 is an operation explanatory view illustrating the flow of the conditioned air at the time of cooling the front and rear seats in the air-conditioner for vehicle of the embodiment.

### DETAILED DESCRIPTION OF THE PREFERRED EMBODIMENTS

Hereinafter, an air-conditioner for vehicle according to an embodiment of the present invention will be described with reference to the accompanying drawings.

### (Embodiment 1)

First, the structure of Embodiment 1 will be described.

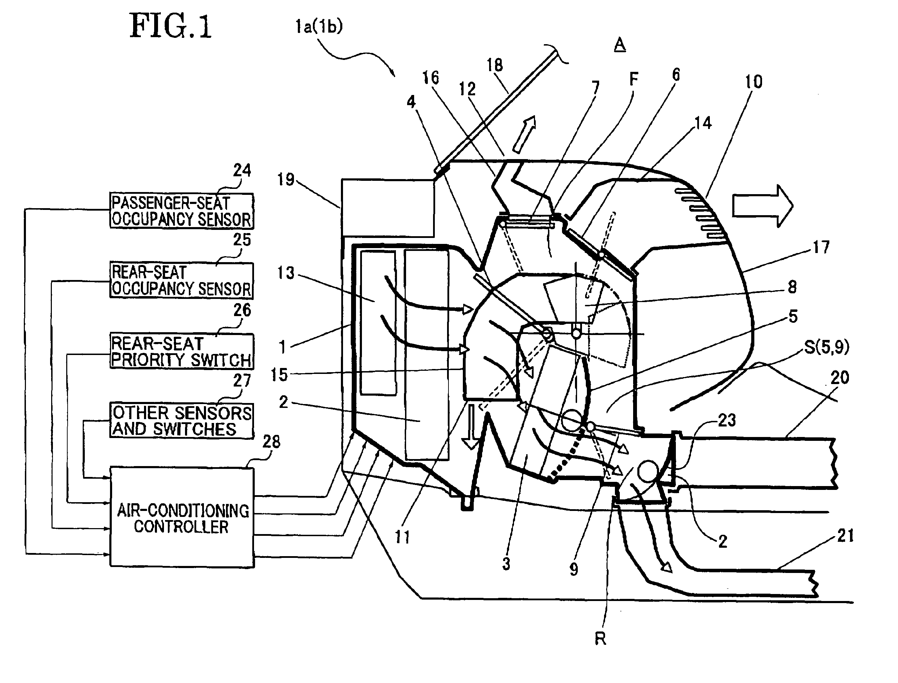

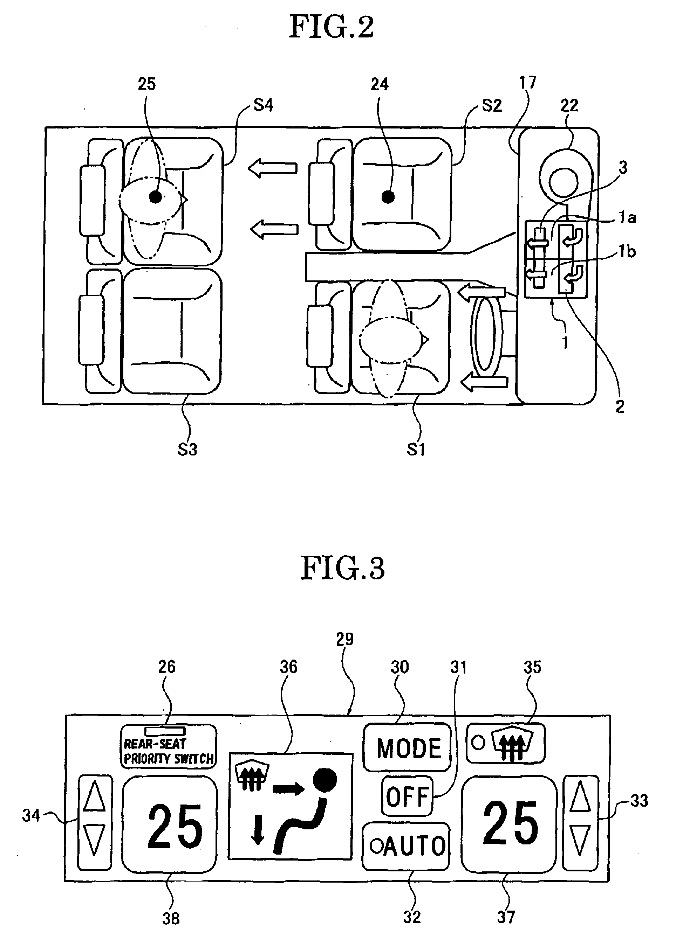

FIG. 1 is an overall system diagram illustrating the air-conditioner for vehicle of Embodiment 1. FIG. 2 is a schematic plan view illustrating a condition in an interior of a vehicle employing the air-conditioner for vehicle of Embodiment 1. FIG. 3 is a diagram illustrating a control panel of the air-conditioner for vehicle of Embodiment 1. The air-conditioner according to Embodiment 1 is for blowing out conditioned air independently to right and left sides of a vehicle.

As shown in FIGs. 1 and 2, the air-conditioner for vehicle A of Embodiment 1 includes a unit casing 1, a cooling heat exchanger 2 and a heating heat exchanger 3 provided in the unit casing 1 to generate conditioned air, a control device such as a conditioning controller 28 and right and left conditioning units 1a, 1b each having a front duct F as a front air-supplying system configured to blow out conditioned air toward a front seat of the vehicle, a rear duct R as a rear air-supplying system configured to blow out conditioned air toward a front seat, and a front/rear switching door S (5, 9) as a front/rear switching system configured to switch between a front state where the conditioned air is blown out via the front duct F to the front seat and a rear state where the conditioned air is blown out via the rear duct R to the rear seat. The control device 28 configured to set one of the front/rear switching doors S, S of the right and left conditioning units 1a, 1b to the front state and the other of the front/rear switching doors S, S of the right and left conditioning units 1a, 1b to the rear state. The front/rear switching door S has a first door 5 (a first front/rear seat switching door, hereinbelow) configured to distribute the conditioned air heated by the heating heat exchanger 3 into front-seat heated conditioned air to be sent to the front seat of the vehicle via the front duct F and rear-seat heated conditioned air to be sent to the rear seat of the vehicle via the rear duct R. The front/rear switching door S may have a second door (a rear-seat mix door or a second front/rear switching doors, hereinbelow) 9 configured to distribute the conditioned air cooled by the cooling heat exchanger into front-seat cooled conditioned air to be sent to the front seat via the front duct and rear-seat cooled conditioned air to be sent to the rear seat via the rear duct. The rear duct has a rear-vent duct 20 configured to blow out the conditioned air as a vent air toward upper side of the rear seat, a rear-foot duct 21 configured to blow out the conditioned air as a foot air toward lower side of the rear seat, and a rear vent/foot switching door 23 provided at a position downstream of the second door 9 to switch a state where the conditioned air is sent to the rear seat via the rear-vent duct 20 and a state where the conditioned air is sent to the rear seat via the rear-foot duct 21. Each of the right and left conditioning units 1a, 1b of the air-conditioner may include an air-mix door 4, a front vent door 6, a defroster door 7, a front foot door 8, a front vent air outlet 10, a front foot air outlet 11, a defroster air outlet 12, and a defroster nozzle 16. The front duct F may include a front vent duct 14 and a front foot duct 15. The air-conditioner may have an air inlet 13, an instrument panel 17, a windshield 18, and a vehicle panel 19.

The air-conditioner A of Embodiment 1, is of right/left independent air-distribution type that sends conditioned air independently to the right and left sides of the vehicle. The air-conditioner A of Embodiment 1 includes the cooling heat exchanger 2, the heating heat exchanger 3, and the air-mix door 4, in the unit casing 1. Moreover, the right and left front vent ducts 14, the right and left front foot ducts 15, the right and left rear vent ducts 20, and the right and left rear foot ducts 21 are provided to the unit casing 1. Through the front vent ducts 14 and the front foot ducts 15, the conditioned air is blown toward the right and left front seats of the vehicle, while through the rear vent ducts 20 and the rear foot ducts 21, the conditioned air is blown toward the right and left rear seats.

The cooling heat exchanger 2 is disposed inside the unit casing 1, and is configured to remove heat from an inside air or an outside air sent into the cooling heat exchanger 2 through the air inlet 13 from a blower unit 22 (see FIG. 2) and thus generates cooled conditioned air. The cooling heat exchanger 2 is a constituent element of an on-vehicle refrigeration cycle, and is called also an evaporator.

The heating heat exchanger 3 is disposed in a position downstream of the cooling heat exchanger 2 inside the unit casing 1, and is configured to give heat to an air sent into the heating heat exchanger 3 through the cooling heat exchanger 2 and thus generates heated conditioned air. The heating heat exchanger 3 is a heat exchanger which an engine coolant or the like that is warm water is circulated through and supplied to, and is called also a heater core.

The air-mix door 4 is disposed between the cooling heat exchanger 2 and the heating heat exchanger 3 inside the unit casing 1, and controls the mixing ratio of the cooled conditioned air from the cooling heat exchanger 2 and the heated conditioned air from the heating heat exchanger 8 by changing the opening degree of the air-mix door 4.

In Embodiment 1, the front/rear switching door S is disposed in a position downstream of the heating heat exchanger 3. The front/rear switching doors S of the right and left conditioning units 1a, 1b send respectively the conditioned air of a volume for one side of the right and left sides of the vehicle to the front seat on the one side and the conditioned air of a volume for the other side of the right and left sides to the rear seat on the other side. The front/rear switching door S includes a front/rear distribution door as the first door 5 and the rear-seat mix door as the second door 9. The front/rear distribution door 5 distributes, to the front seat and the rear seat, the heated conditioned air having passed through the heating heat exchanger 3, while the rear-seat mix door 9 distributes, to the front seat and the rear seat, the cooled conditioned air having passed through the cooling heat exchanger 2.

Each front/rear distribution door 5 has, as shown in FIG. 1, a sliding structure, which is disposed at the position immediately after the heating heat exchanger 3. The front/rear distribution door 5 has a function to control a heated conditioned air distribution ratio of the front-seat side passages and a heated conditioned air distribution ratio of the rear-seat side passages, in addition to a switching function to distribute the heated conditioned air.

Each rear-seat mix door 9 has, as shown in FIG. 1, an opening/closing structure, which rotates about a door shaft disposed in a position immediately after the corresponding front/rear distribution door 5. The rear-seat mix door 9 has a function to distribute the cooled conditioned air to the front-seat side passages and the rear-seat side passages, as well as a function to control a mixing ratio of the heated conditioned air and the cooled conditioned air to be blown into the rear-seat side. That is, the first door 5 may be configured to adjust distribution ratio of the front-seat heated conditioned air and the rear-seat heated conditioned air and the second door 9 may be configured to adjust distribution ratio of the front-seat cooled conditioned air and the rear-seat cooled conditioned air and to adjust mixing ratio of the rear-seat heated conditioned air and the rear-seat cooled conditioned air.

Each of the right and left rear ducts of the right and left conditioning units 1a, 1b in Embodiment 1 includes the rear vent duct 20 blowing a vent air toward the upper body of an occupant sitting in the corresponding rear seat, and the rear foot duct 21 blowing a foot air toward the feet of the occupant setting in the corresponding rear seat. In addition, a vent/foot switching door 23 that switches the sending distribution of the conditioned air between the rear vent duct 20 and the rear foot duct 21 is provided in a position downstream of the rear-seat mix door 9. The vent/foot switching door 23 having a sliding structure may be employed.

The air-conditioner A in Embodiment 1 may include a front seat sensor 24 configured to detect whether or not an occupant is present at the front seat in a passenger side of right and left sides of the vehicle, a rear seat sensor 25 configured to detect whether or not an occupant is present at the rear seat in the passenger side, and a rear-seat priority switch 26 configured to select a rear-seat priority mode where a priority is given to the rear state. That is, the air-conditioner A includes, as a air-conditioning control system, a passenger-seat occupancy sensor as the front seat sensor 24, a rear-seat occupancy sensor as the rear seat sensor 25, the rear-seat priority switch 26, other sensors and switches 27, and an air-conditioning controller as the control device 28.

The passenger-seat occupancy sensor 24 is, as shown in FIG. 2, provided at the position of a passenger seat S2, and detects whether or not an occupant is present in the passenger seat S2.

The rear-seat occupancy sensor 25 is, as shown in FIG. 2, provided at the position of a rear seat S4 on the rear side of the passenger seat S2, and detects whether or not an occupant is present in the rear seat S4. It should be noted that, the seats in the vehicle interior are denoted as shown in FIG. 2. Specifically, a driver's seat is denoted by S1, the passenger seat is denoted by S2, a driver's seat-side rear seat on the rear side of the driver's seat S1 is denoted by S3, and the passenger seat-side rear seat on the rear side of the passenger seat S2 is denoted by S4.

The control device 28 may be configured to output a command to set the front/rear switching door S of one of the right and left conditioning units 1a, 1b in a driver's side of the vehicle to the front state and the front/rear switching door S of the other one of the right and left conditioning units 1a, 1b in the passenger side to the rear state when the front seat sensor detects that an occupant is not present at the front seat and the rear seat sensor detects that an occupant is present at the rear seat in the passenger side. The control device 28 may be configured to output a command to set the front/rear switching doors S of the right and left conditioning units 1a, 1b to the rear state when the rear-seat priority mode is selected by the rear-seat priority switch 26. That is, the rear-seat priority switch 26 is, as shown in FIG. 3, provided on a control panel 29 provided in the instrument panel 17. Turning the rear-seat priority switch 26 ON selects a mode in which priority is given to the air delivery to the right and left rear seats S3 and S4. Note that, as shown in FIG. 3, a mode-selecting switch 30, an OFF switch 31, an auto switch 32, a front-seat temperature adjustment switch 33, a rear-seat temperature adjustment switch 34, a defroster display 35, a mode display 36, a front-seat set-temperature display 37, and a rear-seat set-temperature display 38 are provided on the control panel 29 in addition to the rear-seat priority switch 26.

The other sensors and switches 27 mentioned above include: sensors such as an inside-air sensor, an outside-air sensor, a solar-radiation sensor, and an intake-temperature sensor, which are used for a blown-out air temperature control, an air volume control, an air outlet control, an air inlet control, and the like; and switches such as the mode-selecting switch 30, the OFF switch 31, the auto switch 32, the front-seat temperature adjustment switch 33, the rear-seat temperature adjustment switch 34, and the like, which are provided on the control panel 29.

The air-conditioning controller 28 receives information from the passenger-seat occupancy sensor 24, the rear-seat occupancy sensor 25, the rear-seat priority switch 26, and the other sensors and switches 27, and thus performs a front/rear air-distribution control as well as the blown-out air temperature control, the air volume control, the air outlet control, the air inlet control, and the like. It should be noted that actuators driven by control commands outputted from the air-conditioning controller 28 include a fan motor, an air-mix door actuator, mode door actuators, and other door actuators, which are not illustrated.

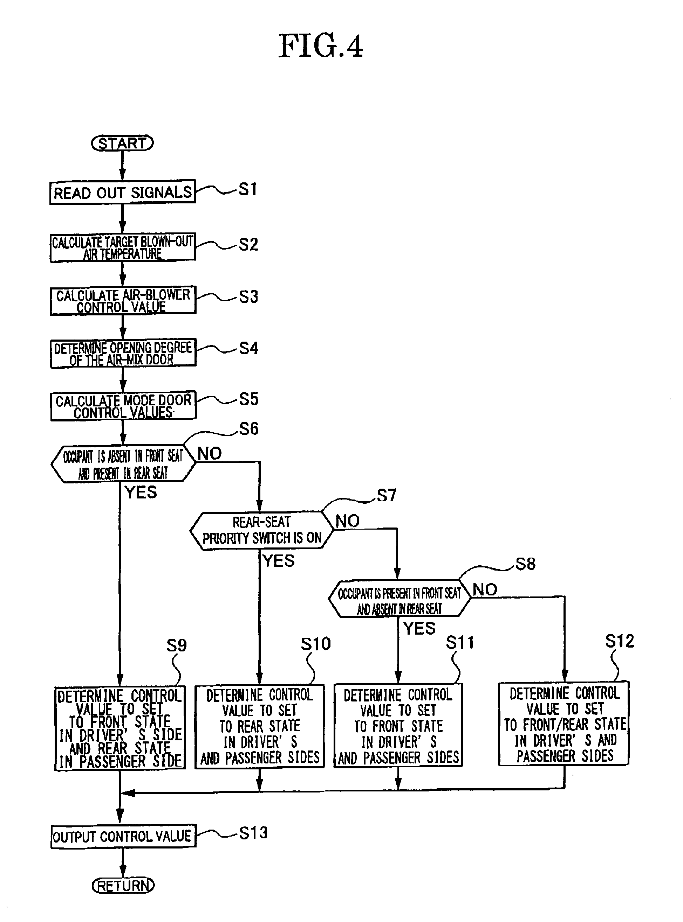

FIG. 4 is a flowchart showing the air-conditioning control processing performed by the air-conditioning controller 28 of the air-conditioner for vehicle A of Embodiment 1. Hereinafter, each step in the air-conditioning control processing will be described.

The control device 28 may be configured to the front/rear switching doors S of the right and left conditioning units 1a, 1b to the front state when the rear-seat priority mode is selected and it is detected that an occupant is present at the front seat in the passenger side and that an occupant is not present at the rear seat in the passenger side. Furthermore, the control device 28 may be configured to output a command to set the front/rear switching doors S of the right and left conditioning units 1a, 1b to a front/rear state where the conditioned air is blown out via the front duct F to the front seat and the rear duct R to the rear seat when the rear-seat priority mode is selected and it is detected that an occupant is present at both of the front and rear seats in the passenger side or that an occupant is not present at both of the front and rear seats in the passenger side.
In Step S1, signals providing input information required for the control are read out from the passenger-seat occupancy sensor 24, the rear-seat occupancy sensor 25, the rear-seat priority switch 26, and the other sensors and switches 27. Then, the processing proceeds to Step S2.

In Step S2, following the reading out of the signals in Step S1, a target blown-out air temperature is calculated based on the temperature inside the vehicle interior, the temperature outside the vehicle, the amount of solar radiation, the intake air temperature, and the like while temperatures set through the front-seat temperature adjustment switch 33 and the rear-seat temperature adjustment switch 34 are taken as target temperatures. Then, the processing proceeds to Step S3.

In Step S3, following the calculation of the target blown-out air temperature in Step S2, an air-blower control value for acquiring a target air volume is calculated. Then, the processing proceeds to Step S4. Here, the target air volume is determined based on the temperature inside the vehicle interior, the temperature outside the vehicle, the amount of solar radiation, the temperature of the engine coolant, the intake air temperature, the vehicle speed, and the like, in response to the setting of the target temperatures through the front-seat temperature adjustment switch 33 and the rear-seat temperature adjustment switch 34.

In Step S4, following the calculation of the air-blower control value in Step S3, the opening degree of the air-mix door 4 (which is a temperature-conditioning door) is determined based on the target temperatures set through the front-seat temperature adjustment switch 33 and the rear-seat temperature adjustment switch 34, the temperature inside the vehicle interior, the temperature outside the vehicle, the amount of solar radiation, the intake air temperature, and the like. Subsequently, a temperature-conditioning door control value for acquiring the determined opening degree is calculated. Then, the processing proceeds to Step S5.

In Step S6, following the calculation of the temperature-conditioning door control value in Step S4, the door opening degrees respectively of the vent doors 6, the defroster door 7, and the foot doors 8 (all of which are mode doors) are determined in accordance with an air-conditioning mode (a vent mode, a defroster mode, a foot mode, a bi-level mode, or the like) selected through the mode-selecting switch 30. Subsequently, mode door control values for acquiring the determined door opening degrees are calculated. Then, the processing proceeds to Step S6.

In Step S6, following the calculation of the mode door control values in Step S5, it is determined whether or not an occupant is absent in the passenger seat but present in the rear seat, based on sensor signals from the passenger-seat occupancy sensor 24 and the rear-seat occupancy sensor 25. When the determination is YES (a case where an occupant is absent in the passenger seat but present in the rear seat), the processing proceeds to Step S9. On the other hand, when the determination is NO (other than the case where an occupant is absent in the passenger seat but present in the rear seat), the processing proceeds to Step S7.

In Step S7, following the determination in Step S6 that it is not the case where the occupant is absent in the passenger seat but present in the rear seat, it is determined whether or not the rear-seat priority switch 26 is ON. When the determination is YES (the rear-seat priority switch 26 is ON), the processing proceeds to Step S10. On the other hand, when the determination is NO (the rear-seat priority switch 26 is OFF), the processing proceeds to Step S8.

In Step S8, following the determination in Step S7 that the rear-seat priority switch 26 is OFF, it is determined whether or not an occupant is absent in the rear seat but present in the passenger seat, based on the sensor signals from the passenger-seat occupancy sensor 24 and the rear-seat occupancy sensor 25. When the determination is YES (a case where an occupant is absent in the rear seat but present in the passenger seat), the processing proceeds to Step S11. On the other hand, the determination is NO (not the case where an occupant is absent in the rear seat but present in the passenger seat), the processing proceeds to Step S12.

In Step S9, following the determination in Step S6 that it is the case where the occupant is absent in the passenger seat but present in the rear seat, control values are determined with which, among the right and left front/rear switching doors 5 and 9, the front/rear switching doors 5 and 9 on the driver's seat side are moved to door positions to send the conditioned air only to the driver's seat S1, that is, are set to the front state, and the front/rear switching doors 5 and 9 on the passenger seat side are moved to door positions to send the conditioned air only to the rear seat S4 on the passenger .seat side, that is, are set to the rear state. Then, the processing proceeds to Step S13.

In Step S10, following the determination in Step S7 that the rear-seat priority switch 26 is ON, control values are determined with which the right and left front/rear switching doors 5 and 9 are moved to door positions to send the conditioned air only to the respective right and left rear seats S3 and S4. Then, the processing proceeds to Step S13.

In Step S11, following the determination in Step S8 that it is the case where the occupant is absent in the rear seat but present in the passenger seat, control values are determined with which the right and left front/rear switching doors 5 and 9 are moved to door positions to send the conditioned air only to the respective right and left front seats S1 and S2. Then, the processing proceeds to Step S13.

In Step S12, following the determination in Step S8 that it is not the case where the occupant is absent in the rear seat but present in the passenger seat, control values are determined with which the right and left front/rear switching doors 5 and 9 are moved to door positions to send the conditioned air to all the front and rear seats S1, S2, S3, and S4. Then, the processing proceeds to Step S13.

In Step S13, following the determination of the control values in one of Step S9 to Step S12, the control values calculated in Step S2 to Step S5 as well as the control values determined in the one of Step S9 to Step S12 are outputted to the corresponding actuators. Then, the processing proceeds to Return.

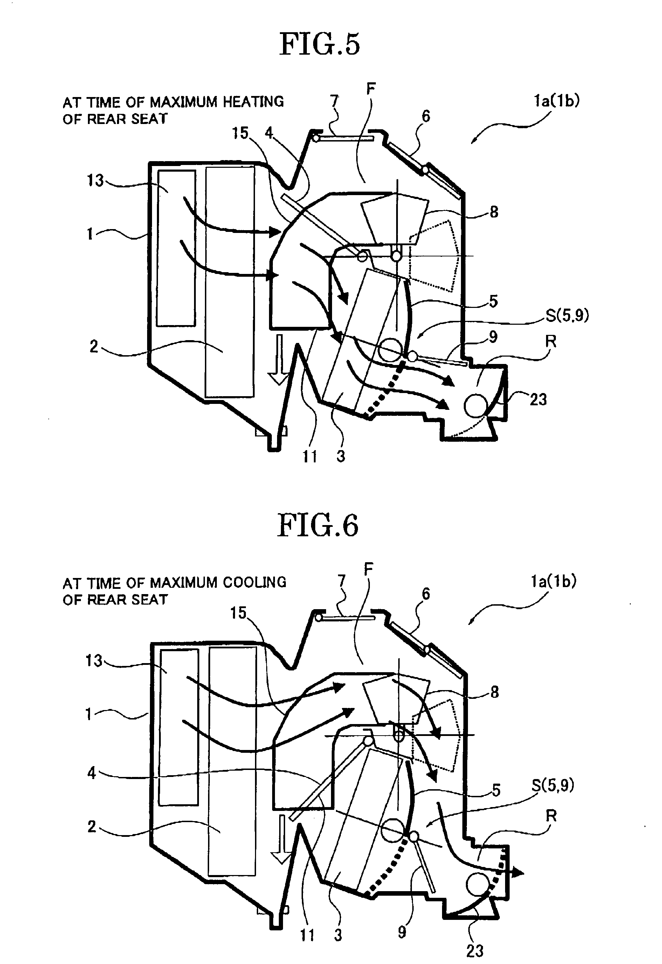

Next, the operations will be described.
The operations in the air-conditioner for vehicle A of Embodiment 1 will be described with reference to FIGs. 5 to 10. Here, the description will be given by dividing the operations into four: an "operation of front/rear air-distribution control in the case where an occupant is absent in the passenger seat but present in the rear seat," an "operation of front/rear air-distribution control in the case where the rear-seat priority switch 26 is turned ON," an "operation of front/rear air-distribution control in the case where an occupant is present in the passenger seat but absent in the rear seat," and an "operation of front/rear air-distribution control in the case where occupants are present or absent in both of the passenger seat and the rear seat."

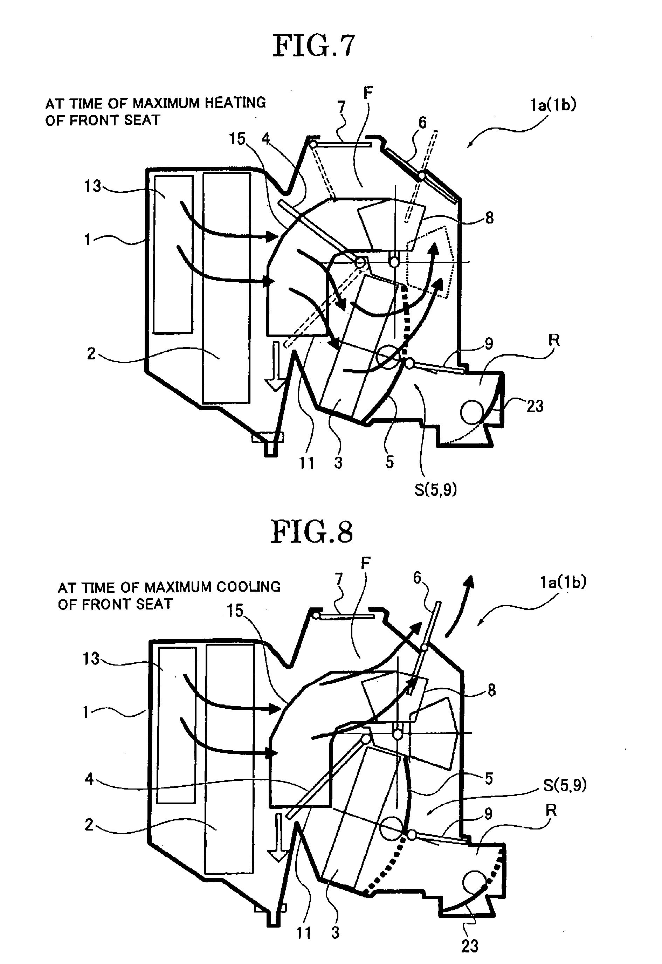

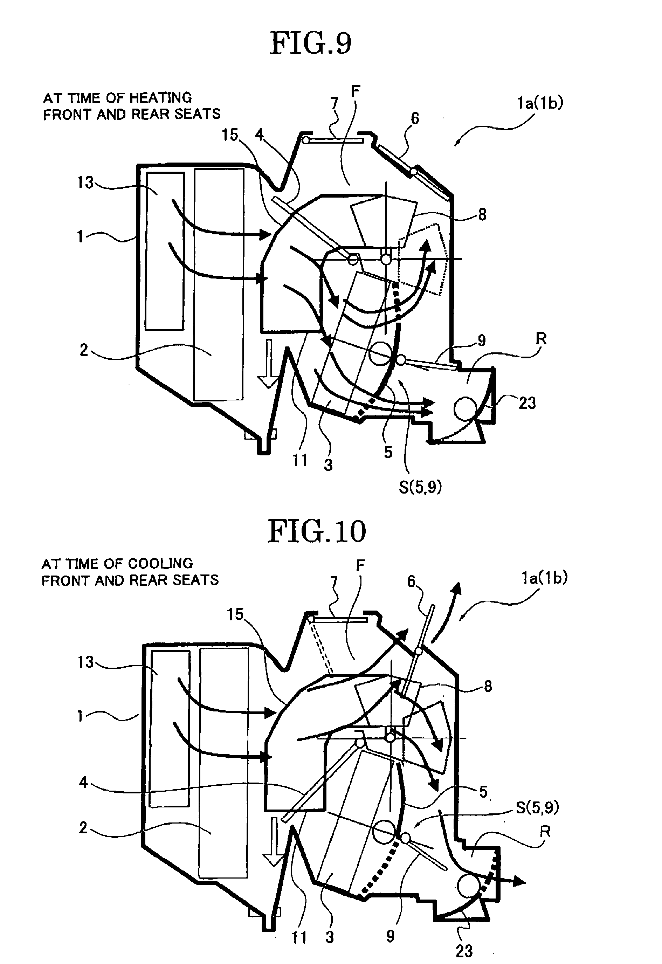

FIG. 5 is an operation explanatory view illustrating the flow of the heated conditioned air at the time of maximum heating of the rear seat in the air-conditioner for vehicle A of Embodiment 1. FIG. 6 is an operation explanatory view illustrating the flow of the cooled conditioned air at the time of maximum cooling of the rear seat in the air-conditioner for vehicle A of Embodiment 1. FIG. 7 is an operation explanatory view illustrating the flow of the heated conditioned air at the time of maximum heating of the front seat in the air-conditioner for vehicle A of Embodiment 1. FIG. 8 is an operation explanatory view illustrating the flow of the cooled conditioned air at the time of maximum cooling of the front seat in the air-conditioner for vehicle A of Embodiment 1. FIG. 9 is an operation explanatory view illustrating the flow of the heated conditioned air at the time of heating the front and rear seats in the air-conditioner for vehicle A of Embodiment 1. FIG. 10 is an operation explanatory view illustrating the flow of the cooled conditioned air at the time of cooling the front and rear seats in the air-conditioner for vehicle A of

### Embodiment 1.

### (Operation of Front/Rear Air-distribution Control in Case Where Occupant is Absent in Passenger Seat but Present in Rear Seat)

When it is determined that an occupant is absent in the passenger seat but present in the rear seat by the passenger-seat occupancy sensor 24 and the rear-seat occupancy sensor 25, the processing flow from Step S1 to Step S13 through Step S2, Step S3, Step S4, Step S5, Step S6, and Step S9 shown in the flowchart of FIG. 4 is repeated.

Then, in Step S9, control values are determined with which, among the right and left front/rear switching doors 6 and 9, the front/rear switching doors 5 and 9 on the driver's seat side are moved to the door positions to send the conditioned air only to the driver's seat S1 (see FIG. 7 and FIG. 8), and the front/rear switching doors 5 and 9 on the passenger seat side are moved to the door positions to send the conditioned air only to the rear seat S4 on the passenger seat side (see FIG. 5 and FIG. 6). In the next Step S13, the control values calculated in Step S2 to Step S5 and the control values determined in Step S9 are outputted to the corresponding actuators.

Accordingly, at the time of maximum heating of the front seat, as shown in FIG. 7, the air-mix door 4 is moved to a cooled conditioned air bypass passage closing position, the front/rear distribution door 5 is moved to a lower-passage closing position, the vent door 6 and the defroster door 7 are moved to closing positions, the foot door 8 is moved to a closing position, the rear-seat mix door 9 is moved to a cooled conditioned air shut-off position. In other words, the air delivery to the rear-seat side is shut off by the front/rear distribution door 5 and the rear-seat mix door 9. Accordingly, all the heated conditioned air having passed through the heating heat exchanger 3 is caused to pass through the foot duct 15 and the foot air outlet 11 so as to be blown out to the feet of the driver sitting in the driver's seat S1.

At the time of maximum heating of the rear seat, as shown in FIG. 5, the air-mix door 4 is moved to the cooled conditioned air bypass passage closing position, the front/rear distribution door 5 is moved to an upper-passage closing position, the rear-seat mix door 9 is moved to the cooled conditioned air shut-off position, and the vent/foot switching door 23 is moved to a foot switching position. In other words, the air delivery to the front-seat side is shut off by the front/rear distribution door 5 and the rear-seat mix door 9. Accordingly, all the heated conditioned air having passed through the heating heat exchanger 3 is caused to pass through the rear foot duct 21 so as to be blown out to the feet of the occupant sitting in the rear seat S4 on the passenger seat side.

At the time of maximum cooling of the front seats, as shown in FIG. 8, the air-mix door 4 is moved to a cooled conditioned air bypass passage opening position, the front/rear distribution door 5 is moved to the upper-passage closing position, the vent door 6 is moved to the closing position, the defroster door 7 and the foot door 8 are moved to the closing positions, the rear-seat mix door 9 is moved to the cooled conditioned air shut-off position. In other words, the air delivery to the rear-seat side is shut off by the air-mix door 4, the front/rear distribution door 5, and the rear-seat mix door 9. Accordingly, all the cooled conditioned air having passed through the cooling heat exchanger 2 is caused to pass through the vent duct 14 and the vent air outlet 10 so as to be blown out to the upper body of the driver sitting in the driver's seat S1.

At the time of maximum cooling of the rear seat, as shown in FIG. 6, the air-mix door 4 is moved to the cooled conditioned air bypass passage opening position, the front/rear distribution door 5 is moved to the upper-passage closing position, the vent door 6 and the defroster door 7 as well as the foot door 8 are moved to the closing positions, the rear-seat mix door 9 are moved to the cooled conditioned air releasing position, and the vent/foot switching door 23 is moved to a vent switching position. In other words, the air delivery to the front-seat side is shut off by the closing of the vent door 6, the defroster door 7, and the foot door 8. Accordingly, all the cooled conditioned air having passed through the cooling heat exchanger 2 is caused to pass through the rear vent duct 20 so as to be blown out to the upper body of the occupant sitting in the rear seat S4 on the passenger seat side.

In the conventional technique, for example, an occupant gets into the vehicle and sits in the rear seat in a state where air of all the volume is being sent to the front seats (two seats) with the air delivery to the rear seats being stopped because only the driver is on the vehicle. In the conventional technique, such a case is dealt with by sending air of all the volume to the front and rear seats (four seats). In this case, since the total volume of air to be sent from the system is invariable, the volume of air to be sent to the driver varies from 1/2 to 1/4 of the total volume of air to be sent. In addition, the volume of air to be sent to the occupant in the rear seat is only 1/4 of the total volume of air to be sent.

On the other hand, in the same case, but in Embodiment 1, an occupant gets into the vehicle and sits in the passenger seat in a state where all the air is being sent to the front seats (two seats) with the air delivery to the rear seats being stopped because only the driver is on the vehicle. In Embodiment 1, such a case can be dealt with by sending, to the rear seat on the passenger seat side, all the volume of air which would be sent to the passenger seat where no occupant is present. In this way, 1/2 of the total volume of air to be sent can be secured as the volume of air to be sent to the occupant in the rear seat, while the volume of air to be sent to the driver is maintained at 1/2 of the total volume of air to be sent.

Accordingly, in Embodiment 1, it is possible to improve the comfort of the occupant in the rear seat without impairing the comfort of the driver in the pattern of occupants in the vehicle where the driver is in the driver's seat S1 and the occupant is in the rear seat S4 on the passenger seat side.

### (Operation of Front/Rear Air-diatribution Control in Case Where Rear-seat Priority Switch is Turned ON)

When the rear-seat priority switch 26 is turned ON, the processing flow from Step S1 to Step S13 through Step S2, Step S3, Step S4, Step S5, Step S6, Step S7, and Step S10 shown in the flowchart of FIG. 4 is repeated.

Then, in Step S10, control values are determined with which the right and left front/rear switching doors 5 and 9 are moved to door positions (FIG. 5 and FIG. 6) to send the conditioned air only to the right and left rear seats S3 and S4, that is, are set to the rear state. In the next Step S13, the control values calculated in Step S2 to Step S5 as well as the control values determined in Step S10 are outputted to the corresponding actuators.

Accordingly, at the time of maximum heating of the rear seats, as shown in FIG. 5, the air-mix door 4 is moved to the cooled conditioned air bypass passage closing position, the front/rear distribution doors 5 are moved to the upper-passage closing positions, the rear-seat mix doors 9 are moved to the cooled conditioned air shut-off positions, and the vent/foot switching door 23 is moved to the foot switching position. In other words, the air delivery to the front-seat side is shut off by the front/rear distribution doors 5 and the rear-seat mix doors 9. Accordingly, all the heated conditioned air having passed through the heating heat exchanger 3 is caused to pass through the rear foot ducts 21 so as to be blown out respectively to the feet of the occupants sitting in the rear seat S3 on the driver's seat side and the rear seat S4 on the passenger seat side.

At the time of maximum cooling of the rear seats, as shown in FIG. 6, the air-mix door 4 is moved to the cooled conditioned air bypass passage opening position, the front/rear distribution doors 5 are moved to the upper-passage closing positions, the vent doors 6 and the defroster door 7 as well as the foot doors 8 are moved to the closing positions, the rear-seat mix doors 9 are moved to the cooled conditioned air releasing positions, and the vent/foot switching door 23 is moved to the vent switching position. In other words, the air delivery to the front-seat side is shut off by the closing of the vent doors 6, the defroster door 7, and the foot doors 8. Accordingly, all the cooled conditioned air having passed through the cooling heat exchanger 2 is caused to pass through the rear vent ducts 20 so as to be blown out respectively to the upper bodies of the occupants sitting in the rear seat S3 on the driver's seat side and the rear seat S4 on the passenger seat side.

Note that, when the conditioned air is sent to the right and left rear seats, the controlling of the door opening degrees of the air-mix door 4 and the rear-seat mix doors 9 makes it possible to blow out the air at the set temperature to the occupants sitting respectively in the rear seat S3 on the driver's seat side and the rear seat S4 on the passenger seat side.

Accordingly, for example, when occupants board on the vehicle and sit in the rear seats S3 and S4 on the driver's seat side and the passenger seat side while the driver is in the driver's seat S1, the driver performs an operation to turn the rear-seat priority switch 26 ON in order to immediately increase or decrease the vehicle interior temperature on the rear-seat side. This operation causes all the delivery air to concentrate on the rear-seat side with priority given to the two occupants in the rear seats, so that the comfort of the occupants in the rear seats can be promptly improved.

### (Operation of Front/Rear Air-distribution Control in Case Where Occupant is Present in Passenger Seat but Absent in Rear Seat)

When it is detected that the occupant is present in the passenger seat but absent in the rear seats with the rear-seat priority switch 26 being OFF, the processing flow from Step S1 to Step S13 through Step S2, Step S3, Step S4, Step S5, Step S6, Step S7, Step S8, and Step S11 as shown in the flowchart of FIG. 4 is repeated.

Then, in Step S11, the control values are determined with which the right and left front/rear switching doors 5 and 9 are moved to the door positions to send the conditioned air only to the right and left front seats S1 and S2, that is, are set to the front state. Then, in the next Step S13, the control values calculated in Step S2 to Step S5 as well as the control values determined in Step S11 are outputted to the corresponding actuators.

Accordingly, at the time of maximum heating of the front seats, as shown in FIG. 7, the air-mix door 4 is moved to the cooled conditioned air bypass passage closing position, the front/rear distribution doors 5 are moved to the lower-passage closing positions, the vent doors 6 and the defroster door 7 are moved to the closing positions, the foot doors 8 are moved to the opening positions, and the rear-seat mix doors 9 are moved to the cooled conditioned air shut-off positions. In other words, the air delivery to the rear-seat side is shut off by the front/rear seats air-distribution doors 5 and the rear-seat mix doors 9. Accordingly, all the heated conditioned air having passed through the heating heat exchanger 3 is caused to pass through the foot ducts 15 and the foot air outlets 11 so as to be blown out respectively to the feet of the driver and the occupant sitting in the driver's seat S1 and the passenger seat S2.

At the time of maximum cooling of the front seats, as shown in FIG. 8, the air-mix door 4 is moved to the cooled conditioned air bypass passage opening position, the front/rear distribution doors 5 are moved to the upper-passage closing positions, the vent doors 6 are moved to the closing positions, the defroster door 7 and the foot doors 8 are moved to the closing positions, and the rear-seat mix doors 9 are moved to the cooled conditioned air shut-off positions. In other words, the air delivery to the rear-seat side is shut off by the air-mix door 4, the front/rear distribution doors 5, and the rear-seat mix doors 9. Accordingly, all the cooled conditioned air having passed through the cooling heat exchanger 2 is caused to pass through the vent ducts 14 and the vent air outlets 10 so as to be blown out respectively to the upper bodies of the driver and the occupant sitting in the driver's seat S1 and the passenger seat S2.

Note that, when the conditioned air is sent to the right and left front seats, the controlling of the door opening degrees of the air-mix door 4 and the rear-seat mix doors 9 makes it possible to blow out the air at the set temperature to the driver and the occupant sitting respectively in the driver's seat S1 and the passenger seat S2.

Accordingly, in the case of the pattern of occupants in the vehicle where the driver and the occupant are respectively in the driver's seat S1 and the passenger seat S2 while no occupant is in both of the right and left rear seats S3 and S4, all the delivery air is caused to concentrate on the front-seat side with priority given to the two occupants in the front seats, so that the comfort of the occupants in the front seats can be promptly improved.

### (Operation of Front/Rear Air-distribution Control in Case Where Occupants are Present or Absent in both of Passenger seat and Rear Seat)

When it is detected that occupants are present or absent in both of the passenger seat and the rear seat or that occupants are absent in both of the passenger seat and the rear seat, with the rear-seat priority switch 26 being OFF, the processing flow from Step S1 to Step S13 through Step S2, Step S3, Step S4, Step S5, Step S6, Step S7, Step S8, and Step S12 as shown in the flowchart of FIG. 4 is repeated.

Then, in Step S12, the control values are determined with which the right and left front/rear switching doors 5 and 9 are moved to the door positions to send the conditioned air to the front and rear seats S1, S2, S3, and S4, that is, are set to the front/rear state. Then, in the next Step S13, the control values calculated in Step S2 to Step S5 as well as the control values determined in Step S12 are outputted to the corresponding actuators.

Accordingly, at the time of heating all the front and rear seats, as shown in FIG. 9, the air-mix door 4 is moved to the cooled conditioned air bypass passage closing position, the front/rear distribution doors 5 are moved to intermediate positions, the vent doors 6 and the defroster door 7 are moved to the closing positions, the foot doors 8 are moved to the opening positions, the rear-seat mix doors 9 are moved to the cooled conditioned air shut-off positions, and the vent/foot switching door 23 is moved to the foot switching position. In other words, a part of the heated conditioned air having passed through the heating heat exchanger 3 is caused to pass through the foot ducts 15 and the foot air outlets 11 so as to be blown out respectively to the regions where the feet of occupants in the driver's seat S1 and the passenger seat S2 are or would be positioned. The rest of the heated conditioned air having passed through the heating heat exchanger 3 is caused to pass through the rear foot ducts 21 so as to be blown out respectively to the regions where the feet of occupants in the rear seats S3 and S4 on the driver's seat side and the passenger seat side are or would be positioned.

At the time of cooling all the front and rear seats, as shown in FIG. 10, the air-mix door 4 is moved to the cooled conditioned air bypass passage opening position, the front/rear distribution doors 5 are moved to the upper-passage closing positions, the vent doors 6 are moved to the opening positions, the defroster door 7 and the foot doors 8 are moved to the closing positions, the rear-seat mix doors 9 are moved to intermediate positions, and the vent/foot switching door 23 is moved to the vent switching position. In other words, a part of the cooled conditioned air having passed through the cooling heat exchanger 2 is caused to pass through the vent ducts 14 and the vent air outlets 10 so as to be blown out respectively to the regions where the upper bodies of occupants in the driver's seat S1 and the passenger seat S2 are or would be positioned. The rest of the cooled conditioned air having passed through the cooling heat exchanger 2 is caused to pass through the rear vent ducts 20 so as to be blown out respectively to the regions where the upper bodies of occupants in the rear seats S3 and S4 on the driver's seat side and the passenger seat side are or would be positioned.

Accordingly in the case of the pattern where occupants are present in all of the driver's seat S1, the passenger seat S2, as well as the right and left rear seats S3 and S4, all the delivery air is divided into four equal volumes of air and then distributed to the occupants in the right and left front seats as well as the occupants in the right and left rear seats. As a result, the comfort of all the occupants can be maintained at a desired level. On the other hand, in the case of the pattern where only the driver is present, the entire interior of the vehicle can be made to be a uniformly-comfortable space with no temperature difference.

Next, the advantageous effects will be described.
According to the air-conditioner for vehicle A of Embodiment 1, the advantageous effects listed below can be obtained.

(1) The air-conditioner for vehicle A of right/left independent air-distribution type, which blows out a conditioned air independently to the right and left sides, includes: the unit casing 1; the cooling heat exchanger 2 housed in the unit casing 1; the heating heat exchanger 3 housed in the unit casing 1; the air-mix door 4 housed in the unit casing 1; the right and left front ducts (the vent ducts 14 and the foot ducts 15) provided to the unit casing 1, the right and left front ducts blowing out the conditioned air respectively toward the right and left front seats S1 and S2; the right and left rear ducts (the rear vent ducts 20 and the rear foot ducts 21) provided to the unit casing 1, the right and left rear ducts blowing out the conditioned air respectively toward the right and left rear seats S3 and S4. In the air-conditioner for vehicle A, the right and left front/rear switching doors (the front/rear distribution doors 5 and the rear-seat mix doors 9) are provided in positions downstream of the heating heat exchanger 3. The front/rear switching doors are respectively configured to send the conditioned air of a volume for one side of the right and left sides of the vehicle to the front seat on the one side, and to send the conditioned air of a volume for the other side of the right and left sides to the rear seat on the other side. Accordingly, it is possible to obtain a comfortable air-conditioning performance corresponding to a pattern of occupants present in the vehicle, and particularly, improve the comfort of an occupant in the rear seat without impairing the comfort of the driver.

(2) The front/rear switching door s include: first front/rear seats switching doors (the front/rear distribution doors 5) that distribute, to the front-seat side passages and the rear-seat side passages, the heated conditioned air having passed through the heating heat exchanger 3; and second front/rear seats switching doors (the rear-seat mix doors 9) that distribute, to the front-seat side passages and the rear-seat side passage, the cooled conditioned air having passed through the cooling heat exchanger 2. With this configuration, it is possible to send air of a volume for one side of the right and left sides of the vehicle to the front seat on the one side, and to send air of a volume for the other side of the right and left sides to the rear seat on the other side, for both of the heating and cooling operation.

(3) Each first front/rear switching door is the front/rear distribution door 5 that controls the heated conditioned air distribution ratio of the corresponding front-seat side passage and the heated conditioned air distribution ratio of the corresponding rear-seat side passage, whereas each second front/rear switching door is the rear-seat mix door 9 that distributes the cooled conditioned air to the corresponding front-seat side passage and the corresponding rear-seat side passage and controls a mixing ratio of the heated conditioned air and the cooled conditioned air to be blown into the rear-seat side. With this configuration, it is possible to send, to any of the front-seat side and the rear-seat side, the conditioned air with a temperature conditioned in accordance with a set temperature.

(4) The right and left rear ducts each include the rear vent duct 20 that blows out vent air to the upper body of an occupant sitting in corresponding one of the rear seats S3 and S4, and the rear foot duct 21 that blows out foot air to the feet of the occupant sitting the corresponding one of the rear seats S3 and S4. In addition, the vent/foot switching door 23 is provided in the position downstream of the rear-seat mix doors 9. The vent/foot switching door 23 switches between the air delivery to the rear vent ducts 20 and the air delivery to the rear foot ducts 21. With this configuration, it is possible to improve the comfort of the occupants in the rear seats by selectively switching between an operation of blowing out the cool vent air at the time of cooling and an operation of blowing out the heated conditioned foot air at the time of heating.

(5) The passenger-seat occupancy sensor 24, the rear-seat occupancy sensor 25, and the front/rear air-distribution control means (corresponding to Step S9 and Step S13 in the flowchart shown in FIG. 4) are provided. The passenger-seat occupancy sensor 24 detects whether or not an occupant is present in the passenger seat S2, while the rear-seat occupancy sensor 25 detects whether or not an occupant is present in the rear seat S4 on the rear side of the passenger seat S2. When the passenger-seat occupancy sensor 24 and the rear-seat occupancy sensor 25 detect that an occupant is absent in the passenger seat but present in the rear seat (YES in Step S6 in the flowchart shown in FIG. 4), the front/rear air-distribution control means outputs control instructions with which, among the right and left front/rear switching doors (the front/rear distribution doors 5 and the rear-seat mix doors 9), the front/rear switching door on the driver's seat side is moved to the door position to send the conditioned air only to the front seat on the driver's seat side, and the front/rear switching door on the passenger seat side is moved to the door position to send the conditioned air only to the rear seat on the passenger seat side. With this configuration, in the case of the pattern of occupants in the vehicle where the driver is in the driver's seat S1 and an occupant is in the rear seat S4 on the passenger seat side, it is possible to improve the comfort of the occupant in the rear seat without impairing the comfort of the driver.

(6) The rear-seat priority switch 26 is provided with which the mode giving priority to the air delivery to the right and left rear seats is selected. When the rear-seat priority switch 26 is turned ON (YES in Step S7), the front/rear air-distribution control means (FIG. 4) outputs control instructions with which the right and left front/rear switching doors (the front/rear distribution doors 5 and the rear-seat mix doors 9) are moved to the door positions to send the conditioned air only to the right and left rear seats, respectively (Step S10 and Step S13). With this configuration, when occupants board on the vehicle and sit in the rear seat S3 on the driver's seat side and the rear seat S4 on the passenger seat side, the operation to turn the rear-seat priority switch 26 ON allows the comfort of the occupants in the rear seats to be promptly improved.

(7) In the case where the rear-seat priority switch 26 is OFF, when it is detected that that an occupant is present in the passenger seat but absent in the rear seat (YES in Step S8), the front/rear air-distribution control means (FIG. 4) outputs control instructions with which the right and left front/rear switching doors (the front/rear distribution doors 5 and the rear-seat mix doors 9) are moved to the door positions to send the conditioned air only to the right and left front seats, respectively. With this configuration, when the driver and an occupant are present in the driver's seat S1 and the passenger seat S2 but no occupant is present in the right and left rear seats S3 and S4, it is possible to promptly improve the comfort of the occupants in the front seats.

(8) In the case where the rear-seat priority switch 26 is OFF, when it is detected that that occupants are present or absent in both of the passenger seat and the rear seat, the front/rear air-distribution control means (FIG. 4) outputs control instructions with which the right and left front/rear switching doors (the front/rear distribution doors 6 and the rear-seat mix doors 9) are moved to the door positions to send the conditioned air to all the front and rear seats. With this configuration, in the case of the pattern where occupants are present in all the driver's seat S1, the passenger seat S2, as well as the right and left rear seats S3 and S4, it is possible to maintain the comfort of all the occupants. Moreover, in the case of the pattern where only the driver is present, it is possible to make the entire interior of the vehicle a uniformly-comfortable space with no temperature difference.

Hereinabove, the air-conditioner for vehicle of the present invention has been described with reference to Embodiment 1. However, the specific configuration of the present invention is not limited to Embodiment 1, and therefore, various modifications, additions, and the like in design may be made without departing from the gist of the present invention according to claims in the scope of claims.

Embodiment 1 shows the example using, as the front/rear switching doors, the front/rear distribution doors 5 that control the heated conditioned air distribution ratio of the front-seat side passages and the heated conditioned air distribution ratio of the rear-seat side passages, and the rear-seat mix doors 9 that distribute the cooled conditioned air to the front-seat side passages and the rear-seat side passages, as well as control the mixing ratio of the heated conditioned air and the cooled conditioned air to be blown into the rear-seat side. Alternatively, a single door may be provided in a position downstream of the heating heat exchanger 3 so as to send air of a volume for one side of the right and left sides of the vehicle to the front seat on the one side, and send air of a volume for the other side of the right and left sides to the rear seat on the other side.

As described above, in the air-conditioner for vehicle of an embodiment of the present invention, it is possible to send air of a volume for one side of the right and left sides of the vehicle to the front seat on the one side, and to send air of a volume for the other side of the right and left sides to the rear seat on the other side by means of the front/rear switching doors provided in the positions downstream of the heating heat exchanger. For example, in a state where air of all the volume is being sent to the front seats (two seats) with the air delivery to the rear seats being stopped because only the driver is on the vehicle, if an occupant gets into the vehicle and sits in the rear seat, the conventional technique deals with this case by sending air of all the volume to the front and rear seats (four seats). In this case, since the total volume of air to be sent from the system is invariable, the volume of air to be sent to the driver varies from 1/2 to 1/4 of the total volume of air to be sent. In addition, the volume of air to be sent to the occupant in the rear seat is only 1/4 of the total volume of air to be sent. On the other hand, in the state where air of all the volume is being sent to the front seats (two seats) with the air delivery to the rear seats being stopped because only the driver is on the vehicle, if an occupant gets into the vehicle and sits in the rear seat, the present invention deals with this case by sending, to the rear seat on the passenger seat side, all the volume of air which would be sent to the passenger seat where no occupant is present. In this way, 1/2 of the total volume of air to be sent can be secured as the volume of air to be sent to the occupant in the rear seat, while the volume of air to be sent to the driver is maintained at 1/2 of the total volume of air to be sent. As a result, it is possible to obtain a comfortable air-conditioning performance corresponding to a pattern of occupants present in the vehicle, and particularly improve the comfort of an occupant in the rear seat without impairing the comfort of the driver.
Although the present invention has been described in terms of exemplary embodiments, it is not limited thereto. It should be appreciated that variations may be made in the embodiments described by persons skilled in the art without departing from the scope of the present invention as defined by the following claims.

## Claims

1. An air-conditioner for blowing out conditioned air independently to right and left sides of a vehicle, the air-conditioner comprising:
a unit casing (1);
a cooling heat exchanger (2) and a heating heat exchanger (3) provided in the unit casing to generate conditioned air;
a control device (28); and
right and left conditioning units (1a, 1b) each having
a front duct (F) configured to blow out the conditioned air toward a front seat;
a rear duct (R) configured to blow out the conditioned air toward a rear seat; and
a front/rear switching door (S) configured to switch between a front state where the conditioned air is blown out via the front duct to the front seat and a rear state where the conditioned air is blown out via the rear duct to the rear seat,
wherein the control device (28) is configured to set one of the front/rear switching doors of the right and left conditioning units to the front state and the other of the front/rear switching doors of the right and left conditioning units to the rear state.

2. The air-conditioner according to claim 1, wherein
the front/rear switching door (S) comprises
a first door (5) configured to distribute the conditioned air heated by the heating heat exchanger into front-seat heated conditioned air to be sent to the front seat of the vehicle via the front duct and rear-seat heated conditioned air to be sent to the rear seat of the vehicle via the rear duct.

3. The air-conditioner according to claim 2, wherein
the front/rear switching door (S) comprises
a second door (9) configured to distribute the conditioned air cooled by the cooling heat exchanger into front-seat cooled conditioned air to be sent to the front seat via the front duct and rear-seat cooled conditioned air to be sent to the rear seat via the rear duct.

4. The air-conditioner according to claim 3, wherein
the first door is configured to adjust distribution ratio of the front-seat heated conditioned air and the rear-seat heated conditioned air; and
the second door is configured to adjust distribution ratio of the front-seat cooled conditioned air and the rear-seat cooled conditioned air and to adjust mixing ratio of the rear-seat heated conditioned air and the rear-seat cooled conditioned air.

5. The air-conditioner according to claim 4, wherein
the rear duct has
a rear-vent duct (20) configured to blow out the conditioned air as a vent air toward upper side of the rear seat,
a rear-foot duct (21) configured to blow out the conditioned air as a foot air toward lower side of the rear seat, and
a rear vent/foot switching door (23) provided at a position downstream of the second door to switch a state where the conditioned air is sent to the rear seat via the rear-vent duct and a state where the conditioned air is sent to the rear seat via the rear-foot duct.

6. The air-conditioner according to one of claims 1 to 5, further comprising:
a front seat sensor (24) configured to detect whether or not an occupant is present at the front seat in a passenger side of right and left sides of the vehicle; and
a rear seat sensor (25) configured to detect whether or not an occupant is present at the rear seat in the passenger side, wherein
the control device (28) is configured to output a command to set the front/rear switching door of one of the right and left conditioning units in a driver's side of the vehicle to the front state and the front/rear switching door of the other one of the right and left conditioning units in the passenger side to the rear state when the front seat sensor detects that an occupant is not present at the front seat and the rear seat sensor detects that an occupant is present at the rear seat in the passenger side.

7. The air-conditioner according to claim 6, further comprising:
a rear-seat priority switch (26) configured to select a rear-seat priority mode where a priority is given to the rear state, wherein
the control device is configured to output a command to set the front/rear switching doors of the right and left conditioning units to the rear state when the rear-seat priority mode is selected by the rear-seat priority switch.

8. The air-conditioner according to claim 7, wherein
the control device is configured to the front/rear switching doors of the right and left conditioning units to the front state when the rear-seat priority mode is selected and it is detected that an occupant is present at the front seat in the passenger side and that an occupant is not present at the rear seat in the passenger side.

9. The air-conditioner according to claim 7 or 8, wherein the control device is configured to output a command to set the front/rear switching doors of the right and left conditioning units to a front/rear state where the conditioned air is blown out via the front duct to the front seat and the rear duct to the rear seat when the rear-seat priority mode is selected and it is detected that an occupant is present at both of the front and rear seats in the passenger side or that an occupant is not present at both of the front and rear seats in the passenger side.
